# EUROPÄISCHE PATENTSCHRIFT

(11) **EP 1 877 680 B1**
(45) Veröffentlichungstag und Bekanntmachung des Hinweises auf die Patenterteilung: **15.12.2010**
(21) Anmeldenummer: 06724682.7
(22) Anmeldetag: 02.05.2006
(51) Int. Cl.: F16F 7/108, F16H 59/02

(54) **ANORDNUNG EINES SCHWINGUNGSTILGERS AN EINEM GETRIEBESCHALTHEBEL EINES KRAFTFAHRZEUGS**
ARRANGEMENT OF A VIBRATION DAMPER ON A GEARSHIFT LEVER OF A MOTOR VEHICLE
DISPOSITION D'UN AMORTISSEUR D'OSCILLATIONS SUR UN LEVIER DE CHANGEMENT DE VITESSE D'UN VEHICULE AUTOMOBILE

(30) Priorität: 06.05.2005 DE 102005021098
(43) Veröffentlichungstag der Anmeldung: 16.01.2008
(73) Patentinhaber: SGF SÜDDEUTSCHE GELENKSCHEIBENFABRIK GMBH & CO. KG., 84478 Waldkraiburg (DE)
(72) Erfinder: REITER, Claus, 84453 Mühldorf (DE); WÄHLING, Werner, 84559 Kraiburg Am Inn (DE)
(74) Vertreter: Katérle, Axel
(86) Internationale Anmeldenummer: PCT/EP2006/004099
(87) Internationale Veröffentlichungsnummer: WO 2006/119891

(56) Entgegenhaltungen:
- EP-A- 0 682 192
- EP-A- 1 422 437
- US-A- 3 419 111
- US-A- 4 787 868
- PATENT ABSTRACTS OF JAPAN Bd. 009, Nr. 044 (P-337), 23. Februar 1985 (1985-02-23) & JP 59 183421 A (NISSAN JIDOSHA KK), 18. Oktober 1984 (1984-10-18)
- PATENT ABSTRACTS OF JAPAN Bd. 2003, Nr. 02, 5. Februar 2003 (2003-02-05) & JP 2002 316548 A (AISIN AI CO LTD), 29. Oktober 2002 (2002-10-29)
- PATENT ABSTRACTS OF JAPAN Bd. 011, Nr. 114 (M-579), 10. April 1987 (1987-04-10) & JP 61 258914 A (TOYOTA MOTOR CORP; others: 01), 17. November 1986 (1986-11-17)
- PATENT ABSTRACTS OF JAPAN Bd. 2003, Nr. 10, 8. Oktober 2003 (2003-10-08) & JP 2003 166579 A (HITACHI UNISIA AUTOMOTIVE LTD), 13. Juni 2003 (2003-06-13)
- PATENT ABSTRACTS OF JAPAN Bd. 1999, Nr. 02, 26. Februar 1999 (1999-02-26) -& JP 10 299833 A (NISSAN MOTOR CO LTD), 13. November 1998 (1998-11-13)
- PATENT ABSTRACTS OF JAPAN Bd. 2000, Nr. 07, 29. September 2000 (2000-09-29) -& JP 2000 120773 A (KINUGAWA RUBBER IND CO LTD), 25. April 2000 (2000-04-25)

## Beschreibung

Die Erfindung betrifft eine Anordnung eines Schwingungstilgers an einem Getriebeschalthebel eines Kraftfahrzeugs gemäß Oberbegriff des Anspruchs 1.

In Kraftfahrzeugen mit Verbrennungsmotor und mechanischem Antriebsstrang können durch die Taktung des Verbrennungsvorgangs hervorgerufene Schwingungen sich über den gesamten Antriebsstrang ausbreiten. Enthält der Antriebsstrang ein handschaltbares mechanisches Wechselgetriebe, so können sich solche Schwingungen auch über ein Schaltgestänge des Wechselgetriebes bis zu einem Schalthebel ausbreiten, mittels dessen der Fahrer die Schaltvorgänge bewirkt. Ein Vibrieren des Schalthebels wird naturgemäß vom Fahrer als wenig komfortabel angesehen. Neben dem unangenehmen Gefühl beim Anfassen des Schalthebels können Schwingungen desselben auch zu einer Geräuschentwicklung führen, die im Fahrgastraum des Fahrzeugs als störend empfunden werden kann. Darüber hinaus sind die mechanische Belastung und der einhergehende Verschleiß zu beachten, die an schwingenden Teilen, insbesondere in Gelenkbereichen, auftreten können.

Zur Schwingungsdämpfung des Getriebeschalthebels ist es bekannt, einen sogenannten Schwingungstilger zu verwenden, der an dem Schalthebel unterhalb eines Handgriffs des Hebels angebracht wird. Der Schwingungstilger weist eine Trägerhülse auf, die an einem Schaft des Schalthebels befestigt wird und - über eine Federverbindung schwingfähig aufgehängt - eine Schwingmasse trägt. Der Schwingungs-tilger ist so ausgelegt, dass seine Schwingmasse zu einer phasenversetzten Eigenschwingung angeregt wird, die zu einer wenigstens teilweisen Auslöschung der unerwünschten Schalthebelschwingungen führt. Man spricht von einer Schwingungstilgung.

Bei einer bekannten Ausführungsform eines Schwingungstilgers wird die Trägerhülse mittels einer sie umschließenden Klemmschelle am Schalthebel befestigt. Die Endbereiche der Klemmschelle sind nach radial außen gebogen und weisen jeweils ein Durchgangsloch zur Aufnahme einer Befestigungsschraube auf. Bei der Montage wird die Befestigungsschraube durch die Löcher in den Schellenenden hindurchgesteckt und eine Schraubmutter auf sie aufgeschraubt. Indem durch Anziehen der Schraube die abgebogenen Endbereiche der Klemmschelle zueinander hingezogen werden, erfolgt eine radiale Einengung der Klemmschelle und damit eine reibschlüssige Anpressung der Trägerhülse an den Schalthebel.

Nachteilig an der bekannten Lösung ist, dass die Montage des Schwingungstilgers aufgrund der mühsamen Anbringung der Klemmschelle vergleichsweise aufwendig ist und dae die abgebogenen Schellenenden der Klemmschelle und die Befestigungsschraube unförmig wegstehen. Oftmals sind an der Klemmschelle und der Befestigungsschraube mehr oder weniger scharfe Kanten vorhanden, die eine Verletzungsgefahr für die üblicherweise vorhandene, oftmals aus Leder hergestellte Abdeckmanschette darstellen können, welche um den Schalthebel herumgelegt ist. Häufig sitzt nämlich der Schwingungstilger nahe unterhalb einer solchen Abdeckmanschette, weswegen die Klemmschelle und die Befestigungsschraube am Material der Abdeckmanschette wetzen können.

Neben dem durch die tangentiale Befestigungsschraube bedingten vergleichsweise großen Platzbedarf ist ein weiterer Nachteil der bekannten Lösung die vergleichsweise geringe Klemmkraft, die mit der Klemmschelle aufgebracht werden kann. Darüber hinaus fehlt bei der bekannten Lösung eine Positionierhilfe, die dem Monteur die ordnungsgemäße Positionierung des Schwingungstilgers längs des Schalthebels erleichtern würde. Der Monteur kann nach Augenmaß vorgehen, was naturgemäß sehr fehleranfällig ist. Eine exakte Positionierung des Schwingungstilgers ist jedoch von großer Wichtigkeit, da zum einen bei falscher Längsposition des Schwingungstilgers am Schalthebel das Schwingungstilgungsverhalten des Schwingungstilgers möglicherweise nicht mehr optimal ist und zum anderen bei zu naher Anbringung des Schwingungstilgers am Handgriff des Schalthebels die Gefahr besteht, dass die Abdeckmanschette die Schwingmasse des Schwingungstilgers berührt und letztere infolgedessen ihrer Schwingfähigkeit behindert ist.

EP 0 682 192 A2 offenbart einen Schwingungsdampfer zur Anbringung an einer Antriebswelle beispielsweise eines Kraftfahrzeugs. Der Schwingungsdämpfer ist in einem Mittelabschnitt der Antriebswelle angeordnet und umfasst eine Dämpferhülse mit einer darin eingebetteten zylindrischen Schwingmasse, welche außenseitig von einer dünnen elastischen Deckschicht überdeckt ist. An ihren axialen Endbereichen ist die Dämpferhülse mit Ringnuten ausgeführt, in welche jeweils ein Halteband eingelegt ist. Gemäß einer Ausführungsform ist die Dämpferhülse im Bereich ihrer axialen Enden jeweils mit einem nach radial innen vorstehenden Ringsteg ausgeführt, welcher an einer konischen Außenumfangsschulter der Antriebswelle anliegt.

JP 2002-316548 A zeigt einen Schalthebel mit einem einen Handgriff aufweisenden äußeren Hebelteil und einem in dieses hineinragenden inneren Hebelteil, wobei radial zwischen dem inneren Hebelteil und dem äußeren Hebelteil ein elastischer Dämpfer eingesetzt ist. An dem im Inneren des äußeren Hebelteils befindlichen Ende des inneren Hebelteils ist zudem ein Gewicht angebracht.

JP 59-183421 A zeigt einen Schalthebel mit einem Knauf, in dessen Innerem ein Tilgerkörper schwingfähig untergebracht ist.

Aufgabe der Erfindung ist es, eine sichere und präzise Positionierung eines Schwingungstilgers an einem Getriebeschalthebel eines Kraftfahrzeugs bei gleichzeitig einfacher und kostengünstiger Herstellung zu ermöglichen.

Zur Lösung dieser Aufgabe ist erfindungsgemäß eine Anordnung mit den Merkmalen des Anspruchs 1 vorgesehen. Bevorzugte Weiterbildungen des Erfindungsgedankens finden sich in den abhängigen Ansprüchen 2 bis 14.

Die Erfindung macht sich zunutze, dass bei einigen Ausführungsformen von Getriebeschatthebein bereits herstellerseitig eine als Positioniergegenformation nutzbare Öffnung vorhanden ist. So sind beispielsweise Getriebeschalthebel erhältlich; welche eine Außenhülse sowie eine sich in die Außenhülse hinein erstreckende und darin in einem Elastomerkörper eingebettete Innenstange aufweisen. Die Innenstange ist zur Kopplung mit dem Schaltgestänge eines Wechselgetriebes vorgesehen. Ihre elastomere Einbettung in der Außenhülse des Schalthebels sorgt für eine Schwingungsdämpfung. Aus fertigungstechnischen Gründen ist bei diesen Ausführungsformen des Schalthebels mindestens eine Öffnung in die Außenhülse eingeformt, durch die hindurch ein Zugang zu der Innenstange ermöglicht ist. Vorteilhafterweise kann diese Öffnung - häufig sind zwei diametral gegenüberliegende Öffnungen in die Außenhülse des Schalthebels eingebracht - als Positionierhilfe für den erfindungsgemäßen Schwingungstilger genutzt werden.

Es versteht sich, dass der Schwingungstilger auch in Verbindung mit anderen Ausführungsformen eines Getriebeschalthebels verwendet werden kann.

Durch die Vorsehung einer am Innenumfang der Trägerhülse des Schwingungstilgers vorstehenden Positionierformation ist gewährleistet, dass ein Monteur stets korrekt die gewünschte Längsposition für den Schwingungstllger an dem Schafttell auffindet und somit ein optimales Schwingungstilgungsverhalten des Schwingungstilgers erzielt wird. Ein zusätzliches Werkzeug als Positionierhilfe ist bei der Montage des Schwingungstilgers nicht erforderlich. Die Positionierformation kann so gestaltet sein, dass ihr Eingriff In die Positioniergegenformation des Schaftteils die Übertragung einer gewissen Haltekraft in axialer oder/und in Umfangsrichtung gestastet. So wird die Sicherheit gegen axiales Verschieben oder/und gegen Verdrehen des Schwingungstilgers gegenüber dem Schaftteil insgesamt erhöht.

Ist die Positioniergegenformation als Loch in dem Schaftteil ausgeführt, wie dies beispielsweise bei dem oben erläuterten Getriebeschalthebel mit der speziellen Konstruktion aus Außenhülse und elastisch darin eingebetteter Innenstange der Fall ist, so ist es zweckmäßig, wenn die Positionierformation die Positioniergegenformation im wesentlichen vollständig abdeckt bzw. verschließt. Zum einen kann hierdurch das unerwünschte Eindringen von Schmutz in die Positioniergegenformation verhindert werden, zum anderen kann in dem Schaftteil sich ausbreitender Schall am Austreten aus der Positioniergegenformation gehindert werden. Bei dem Getriebeschlthebel mit Außenhülle und darin eingebetteter Innenstange hat sich nämlich gezeigt, dass aus der Öffnung bzw. den Öffnungen In der Außenhülse Schall austreten kann, der von den Geräuschen im Antriebsstrang des Fahrzeugs stammt und für die Passagiere störend sein kann. Wird diese Öffnung bzw. werden diese Öffnungen als Positioniergegenformation genutzt und von der mindestens einen Positionierformation des erfindungsgemäßen Schwingungstilgers im wesentlichen vollständig verschlossen, so entfällt die Notwendigkeit, die Öffnung(en) gesondert mittels einer Folie abzudecken. Dies sorgt insgesamt für eine Erleichterung, da ein Arbeitsschritt eingespart werden kann. Im Lichte vorstehender Überlegungen wird die Positionierformation vorzugsweise als angenäherter Kreisvorsprung ausgebildet, der einen Durchmesser zwischen 0,5 und 1,8 cm, vorzugsweise zwischen 0,8 und 1,5 cm besitzen kann.

Um bei Bedarf die Trägerhülse mit wenig Aufwand von dem Schaftteil lösen zu können, ist bei einer bevorzugten Ausführungsform die Positionierformation in Richtung zu einem bei ordnungsgemäßem Aufsetzen der Trägerhülse auf das Schaftteil axial vorlaufenden Ende hin abgeschrägt.

An der Innenumfangsfläche des Spannelements und an der Außeriurnfahgsfläche der Trägerhülse können in Umfangsrichtung zumindest abschnittsweise schräg zueinander verlaufende, einander radial teilweise überlappende Radialklemmflächen ausgebildet sein, deren einander radial überlappende Bereiche zwecks Einengung des Klemmbereichs der Trägerhülse durch Relativdrehung der Trägerhülse und des Spannelements in einer ersten Relativdrehrichtung voreinander bewegbar sind. Durch Relativdrehung der Trägerhülse und des Spannelements können die radial überlappenden Bereiche der Radialklemmflächen in gegenseitigen Eingriff gebracht werden mit der Folge einer radialen Einengung der Trägerhülse im Klemmbereich und einer Anpressung derselben an das Schaftteil. Die Radialklemmfächen sind zweckmäßigerweise so ausgelegt, dass ihr Eingriff selbsthaltend ist. Auf diese Weise wird ein selbsttätiges Lösen des Spannelements von der Trägerhülse verhindert. Die Radialklemmflächen ermöglichen die Erzeugung sehr großer Anpresskräfte, die für einen sehr hochwertigen Relbschluss zwischen Trägerhülse und Schaftteil sorgen. Auf diese Weise wird eine ausgesprochen feste Anbindung der Trägerhülse an das Schaftteil erzielt, die für die volle und optimale Entfaltung der Schwingungstilgungsfähigkeit des Schwingungstilgers bedeutsam ist. Aufgrund der Festigkeit der Anbindung der Trägerhülse an das schaftteil ergibt sich auch eine sehr präzise Genauigkeit der Positionierung des Schwingungstilgers über lange Zeiträume.

Die Montage des Schwingungstilgers nach diesem Gesichtspunkt der Erfindung gestaltet sich ausgesprochen einfach. Durch bloßes Drehen des Spannelements gegenüber der Trägerhülse kann der Schwingungstilger zwischen einer Löse-Drehstellung, in der die radial überlappenden Bereiche der Radialklemmflächen außer Eingriff stehen, und einer Klemm-Drehstellung verstellt werden, in der die radial überlappenden Bereiche der Radialklemmflächen radial voreinander bewegt sind und dementsprechend eine Radialklemmung zwischen der Trägerhülse und dem Schaftteil hergestellt ist. Durch den Drehmechanismus ist nicht nur die Montage, sondern auch eine Demontage des Schwingungstilgers jederzeit problemlos möglich. Unförmig abstehende Teile werden bei dem Schwingungstilger nach diesem Gesichtspunkt - anders als bei der herkömmlichen Schellenlösung - nicht benötigt. Dementsprechend ist auch die Gefahr beseitigt oder zumindest deutlich herabgesetzt, dass eine Abdeckmanschette durch Reiben an Kanten des Schwingungstilgers Schaden nehmen könnte. Das Fehlen solcher unförmig abstehender Teile macht es zudem möglich, den Schwingungstilger noch näher an einer derartigen Abdeckmanschette anzuordnen als dies bisher der Fall war.

Bei einer bevorzugten Weiterbildung ist mindestens eine Radialklemmfläche an einer schräg zur Umfangsrichtung verlaufenden Klemmrampe ausgebildet. Dabei ist es insbesondere möglich, dass das Spannelement und die Trägerhülse jeweils eine Mehrzahl in Umfangsrichtung im Abstand voneinander angeordneter Klemmrampen aufweisen. Die Klemmrampen ermöglichen je nach Relativdrehwinkel zwischen Spannelement und Trägerhülse eine hinsichtlich ihrer Stärke variierbare Klemmung der Trägerhülse. Auch ermöglichen sie - zumindest innerhalb eines gewissen Bereichs - eine Anpassung an unterschiedliche Durchmesser des Schaftteils, ohne hierzu die Trägerhülse und gegebenenfalls das Spannelement auszutauschen zu müssen.

Die Radialklemmflächen besitzen bei einer bevorzugten Ausführungsform bei Betrachtung in einem Axialschnitt ein welliges Profil. Durch das Wellenprofil der Radialklemmflächen werden Raststellungen definiert, die beim Verdrehen des Spannelements relativ zur Trägerhülse für den Monteur fühlbar sind.

Es versteht sich, dass der Schwingungstilger mit beliebigen anderen Ausführungen von Radialklemmflächen ausgebildet sein kann, solange sie auf dem Prinzip der Verklemmung durch radiale Voreinanderbewegung einander radial überlappender Flächenbereiche beruhen. Die Radialklemmflächen können selbstverständlich eben sein statt gewellt. Sie können beispielsweise in Wendelgänge mit variabler Steigung oder in Schraubgewindegänge (z.B. konisch oder schneckenförmig) eingearbeitet sein.

Für eine Sicherheit gegen unbeabsichtigtes Lösen des Spannelements aus der Klemm-Drehstellung gegenüber der Trägerhülse können das Spannelement und die Trägerhülse mit zusammenwirkenden Verzahnungen ausgeführt sein, welche bei gegenseitigem Verzahnungseingriff eine Relativdrehung der Trägerhülse und des Spannelements in der ersten Relativdrehrichtung gestatten, jedoch eine Relativdrehung dieser beiden Komponenten in entgegengesetzter Drehrichtung verhindern. Mindestens eine der Verzahnungen kann dabei an einem Verzahnungsträgerglied angeordnet sein, welches zur Lösung des Verzahnungseingriffs der beiden Verzahnungen flexibel auslenkbar angeordnet ist. Soll der Schwingungstilger von dem Schaftteil demontiert werden, kann das Verzahnungsträgerglied beispielsweise mit den Fingern oder unter Verwendung eines Hilfswerkzeugs weggebogen werden, um so den Eingriff der Verzahnungen des Spannelements und der Trägerhülse zu lösen.

Das Spannelement und die Trägerhülse können mit zusammenwirkenden Axialanschlagflächen ausgeführt sein, welche in der Löse-Drehstellung der Trägerhülse und des Spannelements ein axiales Abziehen des Spannelements von der Trägerhülse gestatten, durch Relativdrehung der Trägerhülse und des Spannelements in Richtung auf die Klemm-Drehstellung jedoch axial voreinander bewegbar sind und dann das Spannelement gegen Abziehen von der Trägerhülse blockieren. Ein unerwünschtes Abziehen des Spannelements von der Trägerhülse in der Klemm-Drehstellung Wird so durch die Axialanschlagflächen verhindern.

Zuvor wurde erwähnt, dass der Schwingungstilger aufgrund des Fehlens unförmig abstehender Teile näher als bisher an einer Abdeckmanschette für einen Getriebeschathebet angeordnet werden kann. Zwar ist die Gefahr, dass die Abdeckmanschette durch weizen an dem Schwingungstilger beschädigt wird, bei der erfindungsgemäßen Lösung verringert, allerdings muss bei entsprechend naher Anordnung des Schwingungstilgers an der Abdeckmanschette weiterhin beachtet werden, dass die Abdeckmanschette nicht an der Schwingmasse anliegt und deren Schwingfähigkeit beeinträchtigt. Hierbei ist insbesondere zu berücksichtigen, dass die Schwingmasse oftmals eine radiale Ausdehnung besitzt, die wesentlich größter als diejenige der Trägerhülse ist. Für einen optimalen Schutz der Schwingmasse vor Berührung durch eine Abdeckmanschette eines Getriebeschalthebels - oder allgemein vor Berührung durch eine beliebige Komponente - wird vorgeschlagen, dass an dem Spannelement eine zur Schwingmasse hin sich insbesondere im wesentlichen konisch erweiternde Schirmeinheit angebracht oder anbringbar ist, deren radiale Ausdehnung wenigstens näherungsweise derjenigen der Schwingmasse entspricht. Die Schirmeinheit sichert die Freigängigkeit der Schwingmasse gegenüber umliegenden Komponenten. Sie kann gesondert von dem Spannelement hergestellt und an diesem lösbar oder nicht lösbar befestigt sein. Sie kann alternativ einstückig mit dem Spannelement ausgebildet sein.

Für einen geringen Montageaufwand und eine hohe Funktionszuverlässigkeit des Schwingungstilgers empfiehlt es sich, dass die Schwingmasse über mindestens ein elastomeres Verbindungselement an der Trägerhülse aufgehängt ist und dieses Verbindungselement an der Trägerhülse und der Schwingmasse anvulkanisiert ist. Auf diese Weise wird eine quasi integrale Ausbildung des Schwingungstilgers geschaffen, die auch im Langzeitbetrieb zuverlässig und störungsfrei arbeitet.

Die Trägerhülse oder/und das Spannelement können aus einem Kunststoffmaterial hergestellt sein, wobei faserverstärktes Polyamid bevorzugt wird. Letzteres Material zeigt bei geringem Gewicht eine besonders hohe Festigkeit.

Die Erfindung wird im Folgenden anhand der beigefügten Zeichnungen weiter erläutert. Es stellen dar:
Figur 1 eine teilweise geschnittene Perspektivansicht eines Ausführungsbeispiels eines an einem Getriebeschalthebel angebrachten Schwingungstilgers,
Figur 2 eine Perspektivansicht einer Trägerhülse des Schwingungstilgers der Figur 1 mit federelastisch aufgehängter Schwingmasse,
Figur 3a eine radiale Draufsicht auf die Trägerhülse der Figur 2,
Figur 3b einen Axialschnitt der Trägerhülse längs der Linie I - I der Figur 3a,
Figur 3c einen Axialschnitt längs der Linie II - II der Figur 3b,
Figur 4a eine radiale Draufsicht auf ein Spannelement mit integralem Schirm des Schwingungstilgers der Figur 1,
Figur 4b einen Axialschnitt längs der Linie III - III der Figur 4a,
Figur 4c einen Axialschnitt längs der Linie IV - IV der Figur 4b,
Figur 5a in einer schematischen Axialschnittdarstellung das Anordnungsbild von Klemmrampen der Trägerhülse und des Spannelements des Schwingungstilgers der Figur 1 und
Figur 5b schematisch ein Wellenprofil einer Klemmrampe.

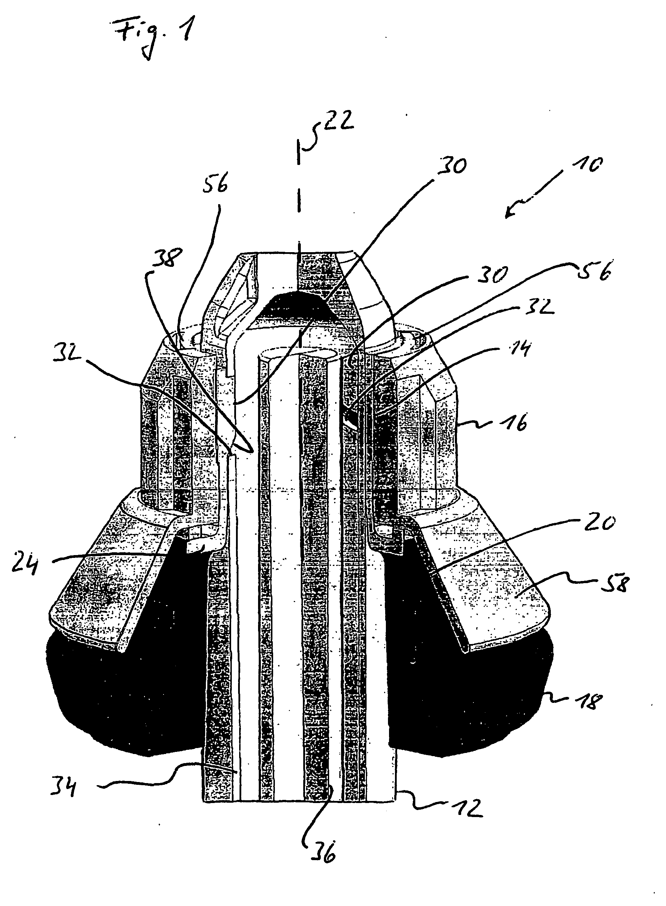

Der in Figur 1 gezeigte Schwingungstilger ist allgemein mit 10 bezeichnet. Er ist an einem Schalthebel 12 befestigt, welcher in nicht näher dargestellter Weise mit dem

Schaltgestänge eines handschaltbaren Wechselgetriebes eines Kraftfahrzeugs gekoppelt ist. Der Schwingungstilger 10 umfasst eine Trägerhülse 14, ein die Trägerhülse 14 im Montagezustand außenseitig umschließendes, ebenfalls hülsenförmiges Spannelement 16 sowie eine Schwingmasse 18, welche über ein aus Naturkautschuk oder anderem Elastomermaterial hergestelltes ringförmiges Verbindungselement 20 schwingfähig an der Trägerhülse aufgehängt ist. Die Trägerhülse 14 besitzt eine Achse 22 und ist an ihrem in Einbaulage unteren axialen Ende mit einem radial auswärts abstehenden Ringflansch 24 ausgeführt, an welchen das Verbindungselement 20 anvulkanisiert ist. Die Schwingmasse 18 ist ein bezüglich der Achse 22 rotationssymmetrischer Körper, an den das Verbindungselement 20 anvulkanisiert ist. Bei Auftreten von Schwingungen an dem Schalthebel 12 wird die Schwingmasse 18 ebenfalls zum Schwingen angeregt. Jedoch sind die Schwingungen der Schwingmasse 18 derart phasenversetzt zu den Schwingungen des Schalthebels 12, dass sich eine wenigstens teilweise Auslöschung (Tilgung) der Vibrationen des Schalthebels 12 ergibt. Zweckmäßigerweise ist die Schwingmasse 18 ein massiver Metallkörper, wenngleich andere Materialien genauso vorstellbar sind.

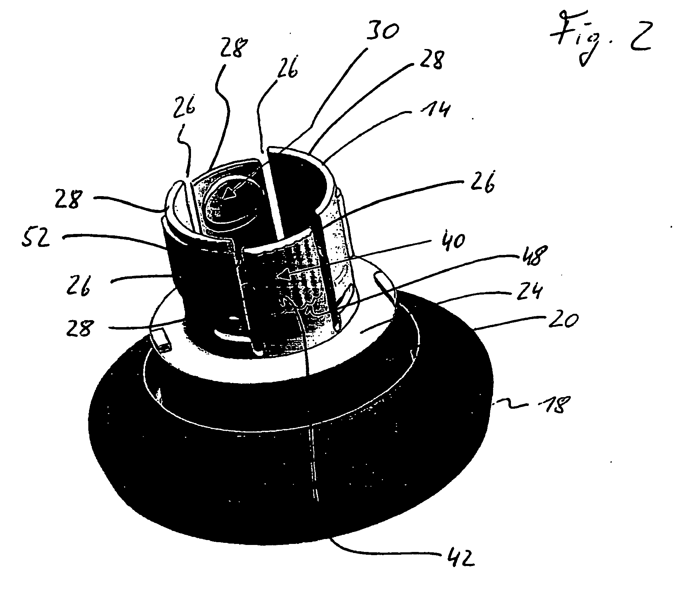

Es wird nun zusätzlich auf Figur 2 verwiesen. Die Trägerhülse 14 weist mehrere in Umfangsrichtung verteilte Axialschlitze 26 auf, die sich über einen Teil der axialen Länge der Trägerhülse 14 erstrecken und zu demjenigen axialen Hülsenende hin offen sind, das entgegengesetzt zu dem mit dem Ringflansch 24 ausgeführten Hülsenende liegt. Im dargestellten Beispielfall sind insgesamt vier Axialschlitze 26 in die Trägerhülse eingeformt. Durch die Axialschlitze 26 werden radial elastische Klemmzungen 28 freigelegt. Das Spannelement 16 hat die Aufgabe, einen radialen Druck auf die Klemmzungen 28 auszuüben, durch den die Klemmzungen nach radial innen gedrückt werden. Hierdurch erfolgt eine durchmesserverringemde radiale Einengung der Trägerhülse 14 im Bereich der Klemmzungen 28, die eine reibschlüssige Verbindung zwischen der Trägerhülse 14 und dem Schalthebel 12 ermöglicht.

Bei dem dargestellten Ausführungsbeispiel besitzen die Klemmzungen 28 zum Teil unterschiedliche Umfangslänge. Es sind zwei schmälere und zwei breitere Klemmzungen vorgesehen, die abwechselnd angeordnet sind.

An der Innenumfangsseite mindestens einer Klemmzunge 28 ist ein näherungsweise kreisförmiger, radial einwärts abstehender Positioniervorsprung 30 ausgebildet. Im gezeigten Beispielfall ist an jeder der beiden schmäleren Klemmzungen 28 je ein derartiger Positioniervorsprung 30 ausgebildet, wenngleich in Figur 2 nur an der hinteren der beiden schmäleren Klemmzungen 28 der daran angeordnete Positioniervorsprung 30 erkennbar ist. Die Positioniervorsprünge 30 sind größenmäßig auf den Durchmesser zweier Öffnungen 32 (Figur 1) abgestimmt, welche einander diametral gegenüberliegend in einer Außenhülse 34 des Schalthebels 12 ausgebildet sind. Die Außenhülse 34 umschließt mit radialem Abstand eine Innenstange 36, welche mit dem Schaltgestänge des Wechselgetriebes verbunden ist. Wenngleich nicht näher dargestellt, ist der radiale Raum zwischen der Innenstange 36 und der Außenhülse 34 wenigstens teilweise von einem Elastomerkörper ausgefüllt, in den die Innenstange 36 eingebettet ist. Dieser Elastomerkörper sorgt für eine gewisse Dämpfung etwaiger Schwingungen, die vom Schaltgestänge auf die Innenstange 36 des Schalthebels 12 übertragen werden. Dennoch werden die Schwingungen durch den Elastomerkörper nicht vollständig gedämpft. Vielmehr wird zumindest ein Teil dieser Schwingungen an die Außenhülse 34 weitergegeben, von der die Schwingungen auf einen nicht näher dargestellten Handgriff des Schalthebels 12 übertragen werden. Die Öffnungen 32 in der Außenhülse 34 gestatten bei der Fertigung des Schalthebels 12 einen Zugang zur Innenstange 36, insbesondere zu Zentrierzwecken.

Es hat sich gezeigt, dass die Öffnungen 32 eine Austrittsquelle für Schall darstellen können, der sich über das Schaltgestänge und die Innenstange 36 in den Schalthebel 12 hinein ausbreitet. Blieben die Öffnungen 32 unverschlossen, könnte der austretende Schall von den im Fahrzeug sitzenden Passagieren als unangenehmes Geräusch empfunden werden. Das dargestellte Ausführungsbeispiel des Schwingungstilgers 10 nutzt die Öffnungen 32 zur Positionierung der Trägerhülse 14 und verschließt dabei die Öffnungen 32, sodass keine gesonderten Maßnahmen zur Abdeckung der Öffnungen 32 getroffen werden müssen. Bei der Montage des Schwingungstilgers 10 am Schalthebel 12 wird die Trägerhülse 14 mit dem Ringflansch 24 voraus auf den Schalthebel 12 - genauer gesagt auf die Außenhülse 34 - geschoben. Die Trägerhülse 14 wird dabei so über die Öffnungen 32 bewegt, dass die Positioniervorsprünge 30 formflüssig in die Öffnungen 32 einschnappen. Aufgrund der Abstimmung der Größe der Positioniervorsprünge 30 auf die Größe der Öffnungen 32 sitzen die Positioniervorsprünge 30 im wesentlichen spielfrei in den Öffnungen 32, was eine präzise Positionierung des Schwingungstilgers 10 in Axialrichtung gewährleistet und zugleich eine Sicherheit gegenüber Verdrehen der Trägerhülse 10 bietet. Bevorzugt weisen die Positioniervorsprünge 30 einen Durchmesser von etwa 1,0 bis 1,2 cm auf.

Wie in Figur 1 gut erkennbar, sind die Positioniervorsprünge 30 im Bereich ihres axial nachlaufenden Endes (das ist in der Figur das axial obere Ende) nicht abgeschrägt, sodass hier ein sicherer Schutz gegen Abziehen der Trägerhülse 14 vom Schalthebel 12 in der Figur nach oben gewährleistet ist. An ihrem in Aufsetzrichtung axial vorlaufenden Ende (also dem in Figur 1 axial unteren Ende) sind die Positioniervorsprünge 30 jedoch mit einer Schräge 38 ausgeführt. Soll die Trägerhülse vom Schalthebel 12 abgenommen werden, so wird sie nach unten gedrückt, bis die Positioniervorsprünge 30 aufgrund der Elastizität der sie tragenden Klemmzungen 28 und aufgrund der Schräge 38 an jedem der Positioniervorsprünge 30 aus den Öffnungen 32 heraustreten. Wird die Trägerhülse 14 dann gegenüber dem Schalthebel 12 verdreht, beispielsweise um 90 Grad, kann sie entgegen der Aufsetzrichtung vom Schalthebel 12 abgezogen werden.

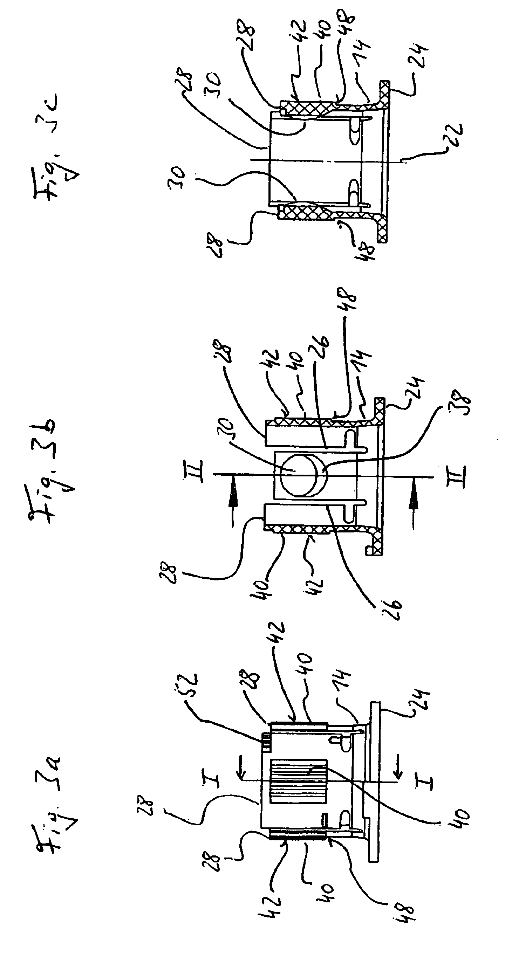

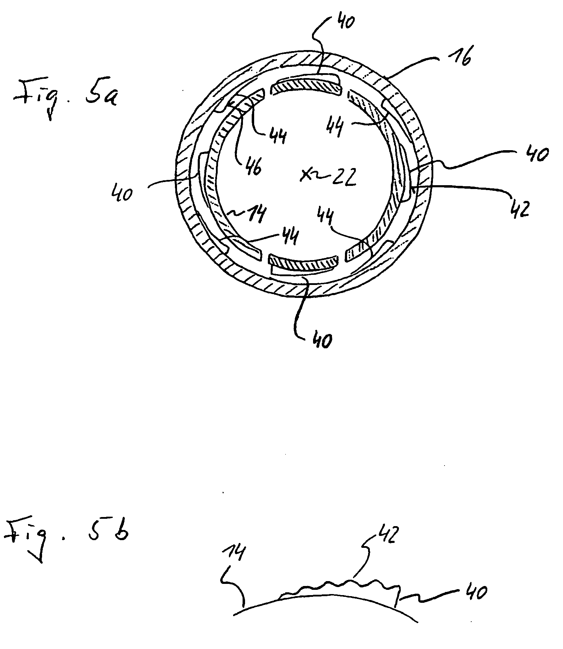

Es wird nun zusätzlich auf die Figuren 3a bis 3c, 4a bis 4c und 5a verwiesen. Jede der Klemmzungen 28 der Trägerhülse 14 ist an ihrer Außenumfangsseite mit einer in Umfangsrichtung sich erstreckenden, nach radial außen rampenartig ansteigenden Klemmrampe 40 ausgeführt, deren Rampenoberfläche eine Radialklemmfläche 42 bildet. Die Schemadarstellung der Figur 5a macht das Verteilungsbild und das ansteigende Profil der Klemmrampen 40 der Trägerhülse 14 gut erkennbar. Die Klemmrampen 40 sind näherungsweise in Winkelabständen von 90 Grad voneinander angeordnet. Es versteht sich, dass nicht jede der Klemmzungen 28 der Trägerhülse 14 mit je einer Klemmrampe 40 ausgeführt sein muss. Auch versteht sich, dass die Gesamtzahl der Klemmrampen 40 nicht wie im vorliegenden Beispielfall vier betragen muss. Eine beliebige andere Anzahl von Klemmrampen 40 ist genauso möglich. Vorzugsweise beträgt die Anzahl der Klemmrampen 40 mindestens zwei, wobei zweckmäßigerweise eine in Umfangsrichtung gleichmäßige Verteilung der Klemmrampen 40 angestrebt wird.

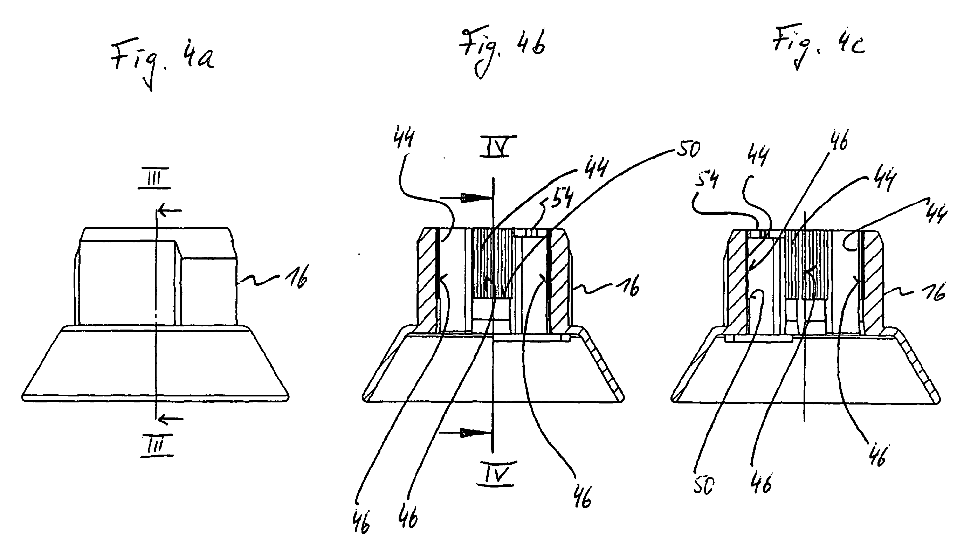

Das Spannelement 16 ist an seiner Innenumfangsseite mit mehreren in Umfangsrichtung sich erstreckenden, nach radial innen ansteigenden Klemmrampen bestückt, die in den Figuren 4b, 4c und auch in Figur 5a erkennbar sind und mit 44 bezeichnet sind. Sie bilden an ihrer Rampenoberfläche je eine Radialklemmfläche 46. Der Anstiegssinn der Klemmrampen 44 des Spannelements 16 ist entgegengesetzt zum Anstiegssinn der Klemmrampen 40 der Trägerhülse 14, wie sich gut aus Figur 5a ergibt. Zweckmäßigerweise sind die Klemmrampen 44 in gleicher Anzahl wie die Klemmrampen 40 vorhanden.

Die schräg zueinander verlaufenden Klemmrampen 40, 44 sind in ihrer radialen Höhe so aufeinander abgestimmt, dass die Klemmrampen 40 radial teilweise mit den Klemmrampen 44 überlappen. Durch Relativdrehung des Spannelements 16 und der Trägerhülse 14 können die radial überlappenden Bereiche der Klemmrampen 40, 44 radial voreinander bewegt und in selbsthaltenden Eingriff gebracht werden. Die Klemmrampen 40 wirken hierbei wie Keile, die aneinander entlang bewegt werden. Der "Keileingrift" der Klemmrampen 40 bewirkt, dass die elastisch auslenkbaren Klemmzungen 28 der Trägerhülse 14 nach radial innen zurückweichen und, sofern die Trägerhülse 14 auf den Schalthebel 12 aufgesetzt ist, diesen klemmen.

Die in Figur 5a gezeigte Relativdrehstellung der Trägerhülse 14 und des Spannelements 16 entspricht einer Löse-Drehstellung, in der die Klemmrampen 40, 44 außer Eingriff sind und das Spannelement 16 axial auf die Trägerhülse 14 aufgeschoben und von dieser abgezogen werden kann. Bei Verdrehen des Spannelements 16 aus der in Figur 5a gezeigten Stellung im Uhrzeigersinn relativ zur Trägerhülse 14 laufen die Klemmrampen 44 des Spannelements 16 auf die Klemmrampen 40 der Trägerhülse 14 auf.

Die Klemmflächen 42, 46 können bei einer einfachen Ausführungsform eben sein. Eine in Umfangsrichtung wellige Ausgestaltung der Klemmflächen 42, 46 hat sich als besonders günstig erwiesen. Figur 5b veranschaulicht am Beispiel einer der an der Trägerhülse 14 angeordneten Klemmflächen 42 einen solchen wellenartigen Verlauf. Die Wellenform der Klemmflächen 42, 46 kann beispielsweise wenigstens näherungsweise durch eine Polynomfunktion bestimmt sein.

Die Klemmrampen 40 bilden an ihren dem Ringflansch 24 zugewandten axialen Rampenseiten jeweils eine Axialanschlagfläche 48, wie in den Figuren 2 und 3a bis 3c erkennbar. Entsprechend bilden die Klemmrampen 44 des Spannelements 16, das vom ringflanschfernen axialen Ende der Trägerhülse 14 her auf diese aufgesetzt wird, an ihren in Aufsetzrichtung axial vorlaufenden Rampenseiten komplementäre Axialanschlagflächen 50, die in den Figuren 4b und 4c erkennbar sind. Die Axialanschlagflächen 48, 50 geraten bei Relativdrehung des Spannelements 16 und der Trägerhülse 14 aus der Löse-Drehstellung gemäß Figur 5 in die Klemm-Drehstellung in axiale Gegenüberlage. Dies verhindert in der Klemm-Drehstellung ein unbeabsichtigtes axiales Verschieben des Spannelements 16 relativ zur Trägerhülse 14 in Richtung zu deren ringflanschfernem Hülsenende. Bei der Demontage des Schwingungstilgers 10 ist das Spannelement 16 zunächst in die Löse-Drehstellung zurückzubewegen, bevor es von der Trägerhülse 14 abgezogen werden kann.

Mindestens ein Teil der Klemmzungen 28 der Trägerhülse 14 - im dargestellten Beispielfall die beiden breiteren Klemmzungen ohne Positioniervorsprung 30 - trägt außenumfangsseitig jeweils eine Verzahnung 52 (siehe insbesondere Figur 2), die bei Überführung des Schwingungstilgers 10 aus der Löse-Drehstellung in die Klemm-Drehstellung in Verzahnungseingriff mit einer innenumfangsseitigen Gegenverzahnung 54 (Figuren 4b, 4c) des Spannelements 16 gelangt. Die Verzahnungen 52, 54 sind derart gestaltet, dass sie bei Relativdrehung der Trägerhülse 14 und des Spannelements 16 aus der Löse-Drehstellung in die Klemm-Drehstellung unter fortwährendem Ausheben und Wiedereingreifen ihrer Zähne sich aneinander entlang bewegen, eine Relativdrehung der Trägerhülse 14 und des Spannelements 16 in entgegengesetzter Drehrichtung jedoch blockieren. Durch diese Wirkungsweise der Verzahnungen 52, 54 wird der Schwingungstilger 10 in der Klemm-Drehstellung gegen Verdrehen des Spannelements 16 relativ zur Trägerhülse 14 gesichert. In Figur 1 ist erkennbar, dass die beiden Verzahnungen 54 des Spannelements 16 an je einem als Verzahnungsträgerglied dienenden, flexibel auslenkbaren Arm 56 ausgebildet sind. Durch Wegdrücken der Arme 56 nach radial außen kann der Eingriff der Verzahnungen 52, 54 gelöst werden und das Spannelement 14 aus der Klemm-Drehstellung in die Löse-Drehstellung zurückbewegt werden.

Die Ansicht der Figur 1 zeigt deutlich, dass die Schwingmasse 18 eine wesentlich größere radiale Ausdehnung als die Trägerhülse 14 und auch das Spannelement 16 besitzt. Um die Schwingmasse 18 vor unbeabsichtigten Berührungen mit einer nicht näher dargestellten, um den Schalthebel 12 gelegten Abdeckmanschette zu schützen und so die Schwingfähigkeit der Schwingmasse 18 zu gewährleisten, trägt das Spannelement 16 einen einstückig angeformten Schirm 58, welcher sich von dem Spannelement 16 konisch zur Schwingmasse 18 hin aufweitet und an seinem aufgeweiteten Ende einen Durchmesser besitzt, der zumindest im Wesentlichen gleich dem maximalen Außendurchmesser der Schwingmasse 18 ist. Wird der Schwingungtilger 10 sehr nahe unter einer Abdeckmanschette montiert, kann sich die Abdeckmanschette an den Schirm 58 anlegen, ohne hierdurch die Freigängigkeit der Schwingmasse 18 zu gefährden.

Das Spannelement 16 mit dem integral angeformten Schirm 58 wird vorzugsweise aus glasfaserverstärktem Polyamid 6.6 hergestellt. Das gleiche Material kann auch für die Trägerhülse 14 verwendet werden. Selbstverständlich sind andere Kunststoffmaterialien, aber auch metallische Werkstoffe für die Trägerhülse 14 und das Spannelement 16 möglich.

## Patentansprüche

1. Anordnung eines Schwingungstilgers an einem Getriebeschalthebel (12) eines Kraftfahrzeugs, wobei der Getriebeschalthebel eine Außenhülse (34) sowie eine sich in die Außenhülse hinein erstreckende und darin in einem Elastomerkörper eingebettete Innenstange (36) aufweist, **dadurch gekennzeichnet, dass** die Außenhülse mindestens eine einen Zugang zu der Innenstange gestattende Öffnung (32) aufweist, und dass der Schwingungstilger (10) umfasst:
- eine auf den Getriebeschalthebel (12) aufzusetzende Trägerhülse (14) mit einer Hülsenachse (22), wobei die Trägerhülse einen Klemmbereich aufweist, in dem sie zur Klemmung des Getriebeschalthebels (12) radial einengbar ausgeführt ist,
- eine schwingfähig an der Trägerhülse aufgehängte Schwingmasse (18) sowie
- ein im Montagezustand die Trägerhülse in deren Klemmbereich umschließendes Spannelement (16) zur radialen Einengung des Klemmbereichs,
wobei die Trägerhülse in ihrem Klemmbereich mindestens eine radial einwärts vorstehende Positionierformation (30) aufweist, welche zum positionierenden Eingriff in die Öffnung (32) der Außenhülse des Getriebeschalthebels bestimmt und ausgebildet ist.

2. Anordnung nach Anspruch 1,
**dadurch gekennzeichnet, dass** die Positionierformation (30) näherungsweise als Kreisvorsprung ausgebildet ist.

3. Anordnung nach Anspruch 2,
**dadurch gekennzeichnet, dass** der Kreisvorsprung (30) einen Durchmesser zwischen 0,5 und 1,8 cm, vorzugsweise zwischen 0,8 und 1,5 cm besitzt.

4. Anordnung nach einem der vorhergehenden Ansprüche,
**dadurch gekennzeichnet, dass** die Positionierformation (30) in Richtung zu einem bei ordnungsgemäßem Aufsetzen der Trägerhülse (14) auf den Getriebeschalthebel axial vorlaufenden Ende hin abgeschrägt ist.

5. Anordnung nach einem der vorhergehenden Ansprüche,
**dadurch gekennzeichnet, dass** an der Innenumfangsfläche des Spannelements (16) und an der Außenumfangsfläche der Trägerhülse (14) in Umfangsrichtung zumindest abschnittsweise schräg zueinander verlaufende, einander radial teilweise überlappende Radialklemmflächen (42, 46) ausgebildet sind, deren einander radial
überlappende Bereiche zwecks Einengung des Klemmbereichs der Trägerhülse durch Relativdrehung der Trägerhülse und des Spannelements in einer ersten Relativdrehrichtung voreinander bewegbar sind.

6. Anordnung nach Anspruch 5,
**dadurch gekennzeichnet, dass** mindestens eine Radialklemmfläche (42, 46) an einer schräg zur Umfangsrichtung verlaufenden Klemmrampe (40, 44) ausgebildet ist.

7. Anordnung nach Anspruch 6,
**dadurch gekennzeichnet, dass** das Spannelement (16) und die Trägerhülse (14) jeweils eine Mehrzahl in Umfangsrichtung im Abstand voneinander angeordneter Klemmrampen (40, 44) aufweisen.

8. Anordnung nach einem der Ansprüche 5 bis 7,
**dadurch gekennzeichnet, dass** die Radialklemmflächen (42, 46) bei Betrachtung in einem Axialschnitt ein welliges Profil besitzen.

9. Anordnung nach einem der Ansprüche 5 bis 8,
**dadurch gekennzeichnet, dass** das Spannelement (16) und die Trägerhülse (14) mit zusammenwirkenden Verzahnungen (52, 54) ausgeführt sind, welche bei gegenseitigem Verzahnungseingriff eine Relativdrehung der Trägerhülse und des Spannelements in der ersten Relativdrehrichtung gestatten, jedoch eine Relativdrehung dieser beiden Komponenten in entgegengesetzter Relativdrehrichtung verhindern.

10. Anordnung nach Anspruch 9,
**dadurch gekennzeichnet, dass** mindestens eine (54) der Verzahnungen (52, 54) an einem Verzahnungsträgerglied (56) angeordnet ist, welches zur Lösung des Verzahnungseingriffs der beiden Verzahnungen flexibel auslenkbar angeordnet ist.

11. Anordnung nach einem der Ansprüche 5 bis 10,
**dadurch gekennzeichnet, dass** das Spannelement und die Trägerhülse mit zusammenwirkenden Axialanschlagflächen (48, 50) ausgeführt sind, welche in einer relativen Löse-Drehstellung der Trägerhülse (14) und des Spannelements (16), in der die Radialklemmflächen (42, 46) dieser beiden Komponenten außer Klemmeingriff sind, ein axiales Abziehen des Spannelements von der Trägerhülse gestatten, durch Relativdrehung der Trägerhülse und des Spannelements in der ersten
Relativdrehrichtung jedoch axial voreinander bewegbar sind und dann das Spannelement gegen Abziehen von der Trägerhülse blockieren.

12. Anordnung nach einem der vorhergehenden Ansprüche,
**dadurch gekennzeichnet, dass** sich die Schwingmasse (18) radial über die Trägerhülse (14) hinaus erstreckt und dass an dem Spannelement (16) eine zur Schwingmasse hin sich insbesondere im wesentlichen konisch erweiternde Schirmeinheit (58) angebracht oder anbringbar ist, deren radiale Ausdehnung wenigstens näherungsweise derjenigen der Schwingmasse entspricht.

13. Anordnung nach einem der vorhergehenden Ansprüche,
**dadurch gekennzeichnet, dass** die Schwingmasse (18) über mindestens ein elastomeres Verbindungselement (20) an der Trägerhülse (14) aufgehängt ist und das Verbindungselement an der Trägerhülse und der Schwingmasse anvulkanisiert ist.

14. Anordnung nach einem der vorhergehenden Ansprüche,
**dadurch gekennzeichnet, dass** die Trägerhülse (14) oder/und das Spannelement (16) aus einem Kunststoffmaterial, vorzugsweise faserverstärktem Polyamid, hergestellt ist.

## Claims

1. Arrangement of a vibration damper on a gearshift lever (12) of a motor vehicle, said gearshift lever comprising an outer sleeve (34) as well as an inner rod (36) extending into said outer sleeve and embedded therein in an elastomeric body,
**characterized in that** the outer sleeve is provided with at least one opening (32) allowing access to the inner rod, and that the vibration damper (10) comprises:
- a support sleeve (14) which is to be placed onto the gearshift lever (12) and which has a sleeve axis (22), said support sleeve including a clamping zone in which it is designed in a radially constrictable manner so as to clamp the gearshift lever (12),
- an oscillating weight (18) suspended on the support sleeve so as to be able to oscillate, and
- a clamping element (16) which, in the assembled state, encompasses the support sleeve in the clamping zone thereof so as to radially constrict said clamping zone,
wherein the support sleeve comprises in its clamping zone at least one positioning formation (30) which projects radially inwards and which is intended for and configured for a positioning engagement with the opening (32) of the outer sleeve of the gearshift lever.

2. An arrangement according to claim 1,
**characterized in that** the positioning formation (30) has approximately the shape of a circular projection.

3. An arrangement according to claim 2,
**characterized in that** the circular projection (30) has a diameter that ranges from 0.5 to 1.8 cm, preferably from 0.8 to 1.5 cm.

4. An arrangement according to one of the preceding claims,
**characterized in that** the positioning formation (30) is bevelled in the direction of an end constituting the axially leading end when the support sleeve (14) is correctly placed onto the gearshift lever.

5. An arrangement according to any one of the preceding claims, **characterized in that** the inner circumferential surface of the clamping element (16) and the outer circumferential surface of the support sleeve (14) have formed thereon radial clamping faces (42, 46) which extend, at least in certain areas thereof, at an oblique angle to one another in the circumferential direction and which partially overlap each other in the radial direction, the radially overlapping areas of said radial clamping faces (42, 46) being adapted to be moved in front of one another for the purpose of constricting the clamping zone of the support sleeve by rotating the support sleeve and the clamping element relative to one another in a first direction of relative rotation.

6. An arrangement according to claim 5,
**characterized in that** at least one radial clamping face (42, 46) is formed on a clamping ramp (40, 44) that extends at an oblique angle to the circumferential direction.

7. An arrangement according to claim 6,
**characterized in that** the clamping element (16) and the support sleeve (14) are each provided with a plurality of circumferentially spaced clamping ramps (40, 44).

8. An arrangement according to any one of claims 5 to 7,
**characterized in that**, when seen in an axial section, the radial clamping faces (42, 46) have a wavy profile.

9. An arrangement according to any one of claims 5 to 8,
**characterized in that** the clamping element (16) and the support sleeve (14) are provided with cooperating toothings (52, 54) which, when in interlocking engagement with one another, allow a relative rotation of the clamping element and the support sleeve in the first direction of relative rotation, but prevent a relative rotation of these two components in the opposite direction of relative rotation.

10. An arrangement according to claim 9,
**characterized in that** at least one (54) of said toothings (52, 54) is arranged on a toothing carrier member (56) which, for releasing the interlocking engagement of the two toothings, is arranged such that it is flexibly deflectable.

11. An arrangement according to any one of claims 5 to 10,
**characterized in that** the clamping element and the support sleeve are provided with cooperating axial stop faces (48, 50) which, in a relative release-rotary position of the support sleeve (14) and of the clamping element (16), at which the radial clamping faces (42, 46) of these two components are not in clamping engagement, allow an axial removal of the clamping element from the support sleeve, but which, in response to a relative rotation of the support sleeve and the clamping element in the first direction of relative rotation, can be moved axially in front of one another, whereupon they block the clamping element such that it cannot be removed from the support sleeve.

12. An arrangement according to any one of the preceding claims, **characterized in that** the oscillating weight (18) extends radially beyond the support sleeve (14), and that a shield unit (58), which enlarges towards the oscillating weight especially in a substantially conical fashion, is provided or adapted to be provided on the clamping element (16), the radial dimensions of said shield unit (58) corresponding at least approximately to those of the oscillating weight.

13. An arrangement according to any one of the preceding claims, **characterized in that** the oscillating weight (18) is suspended on the support sleeve (14) via at least one elastomeric connection element (20), and that the connection element is vulcanized on the support sleeve and the oscillating weight.

14. An arrangement according to any one of the preceding claims, **characterized in that** the support sleeve (14) or/and the clamping element (16) are produced from a plastic material, preferably from fibre-reinforced polyamide.

## Revendications

1. Disposition d'un amortisseur d'oscillations sur un levier de changement de vitesse (12) d'un véhicule automobile, ledit levier de changement de vitesse présentant un manchon extérieur (14) et une tige intérieure (36) qui s'étend à l'intérieur du manchon extérieur et dans lequel elle est logée dans un corps en élastomère, **caractérisée en ce que** le manchon extérieur présente au moins une ouverture (32) permettant l'accès à la tige intérieure, et **en ce que** l'amortisseur d'oscillations (10) comprend :
- un manchon porteur (14) destiné à être monté sur le levier de changement de vitesse (12) et présentant un axe de manchon (22), ledit manchon porteur comportant une zone de serrage et réalisé de manière à pouvoir être comprimé radialement pour serrer le levier de vitesse (12),
- une masse oscillante (18) suspendue au manchon porteur de manière à pouvoir osciller, et
- un élément de serrage (16) qui, à l'état monté, entoure le manchon porteur au niveau de ladite zone de serrage pour comprimer radialement cette zone de serrage, le manchon porteur présentant dans sa zone de serrage au moins une structure de positionnement (30) qui fait saillie radialement vers l'intérieur et est conçue et réalisée pour être amenée en prise de positionnement dans l'ouverture (32) du manchon extérieur du levier de changement de vitesse.

2. Disposition selon la revendication 1,
**caractérisée en ce que** la structure de positionnement (30) est réalisée approximativement comme saillie circulaire.

3. Disposition selon la revendication 2,
**caractérisée en ce que** la saillie circulaire (30) possède un diamètre compris entre 0,5 et 1,8 cm, de préférence entre 0,8 et 1,5 cm.

4. Disposition selon l'une des revendications précédentes,
**caractérisée en ce que** la structure de positionnement (30) est tronquée en direction d'une extrémité avançant axialement lorsque le manchon porteur (14) est monté correctement sur le levier de changement de vitesse.

5. Disposition selon l'une des revendications précédentes,
**caractérisée en ce que** sont réalisées sur la surface périphérique intérieure de l'élément de serrage (16) et sur la surface périphérique extérieure du manchon porteur (14) des surfaces de serrage radiales (42, 46) qui s'étendent au moins pour partie de manière oblique les unes vers les autres et empiètent partiellement radialement les unes sur les autres dans la direction périphérique, et dont les zones se chevauchant radialement peuvent être déplacées les unes devant les autres dans un premier sens de rotation relatif pour comprimer la zone de serrage du manchon porteur par rotation relative du manchon porteur et de l'élément de serrage.

6. Disposition selon la revendication 5,
**caractérisée en ce qu'**au moins une surface de serrage radiale (42, 46) est réalisée sur une rampe de serrage (40, 44) s'étendant de manière oblique par rapport à la direction périphérique.

7. Disposition selon la revendication 6,
**caractérisée en ce que** l'élément de serrage (16) et le manchon porteur (14) présentent respectivement une pluralité de rampes de serrage (40, 44) disposées à distance les unes des autres dans la direction périphérique.

8. Disposition selon l'une des revendications 5 à 7,
**caractérisée en ce que** les surfaces de serrage radiales (42, 46), vues en coupe dans le sens axial, possèdent un profil ondulé.

9. Disposition selon l'une des revendications 5 à 8,
**caractérisée en ce que** l'élément de serrage (16) et le manchon porteur (14) sont réalisés munis de dentures (52, 54) coopérantes qui permettent par engrènement réciproque une rotation relative du manchon porteur et de l'élément de serrage dans un premier sens de rotation relatif tout en empêchant une rotation relative de ces derniers dans un sens de rotation relatif contraire.

10. Procédé selon la revendication 9,
**caractérisé en ce qu'**au moins une (54) des dentures (52, 54) est disposée déviable de manière flexible sur un organe porteur de denture (56) pour libérer l'engrènement des deux dentures.

11. Disposition selon l'une des revendications 5 à 10,
**caractérisée en ce que** l'élément de serrage et le manchon porteur sont réalisés munis de surfaces de butée axiales (48, 50) coopérantes qui, dans une position de libération par rotation relative du manchon porteur (14) et de l'élément de serrage (16) dans laquelle les surfaces de serrage relatives (42, 46) de ces derniers sont hors de prise de serrage, permettent de retirer axialement l'élément de serrage du manchon porteur, mais peuvent cependant être axialement déplacées les unes devant les autres par rotation relative du manchon porteur et de l'élément de serrage dans le premier sens de rotation relatif et bloquer ensuite l'élément de serrage pour qu'il ne puisse pas être retiré du manchon porteur.

12. Disposition selon l'une des revendications précédentes,
**caractérisée en ce que** la masse oscillante (18) s'étend radialement au-delà du manchon porteur (14) et **en ce qu'**une unité de protection (58), qui va en s'élargissant en particulier essentiellement de manière conique vers la masse oscillante et dont l'extension radiale correspond pour le moins approximativement à celle de la masse oscillante, est ou peut être montée sur l'élément de serrage (16).

13. Disposition selon l'une des revendications précédentes,
**caractérisée en ce que** la masse oscillante (18) est suspendue au manchon porteur (14) par au moins un élément de jonction élastomère (20) et ledit élément de jonction vulcanisé sur le manchon porteur et sur la masse oscillante.

14. Disposition selon l'une des revendications précédentes,
**caractérisée en ce que** le manchon porteur (14) ou/et l'élément de serrage (16) sont fabriqués à partir d'un matériau synthétique, de préférence à partir d'un polyamide renforcé par des fibres.
